Europäisches Patentamt

(19) **European Patent Office**

Office européen des brevets

(11) Numéro de publication: **0 006 384**
**B1**

(12) **FASCICULE DE BREVET EUROPEEN**

(45) Date de publication du fascicule du brevet: **05.05.82**

(51) Int. Cl.³: **H 04 L 7/04, H 04 L 7/10**

(21) Numéro de dépôt: **79400385.5**

(22) Date de dépôt: **12.06.79**

(54) **Dispositif de synchronisation à partir d'un signal numérique reçu et système de transmission comportant un tel dispositif.**

(30) Priorité: **20.06.78 FR 7818406**

(43) Date de publication de la demande:
**09.01.80 Bulletin 80/1**

(45) Mention de la délivrance du brevet:
**05.05.82 Bulletin 82/18**

(84) Etats contractants désignés:
**BE CH DE GB IT NL SE**

(56) Documents cités:
**FR - A - 1 426 996**

(73) Titulaire: **THOMSON-CSF**
**173, Boulevard Haussmann**
**F-75360 Paris Cedex 08 (FR)**

(72) Inventeur: **Deman, Pierre**
**"THOMSON-CSF" - SCPI 173, bld Haussmann**
**F-75360 Paris Cedex 08 (FR)**

(74) Mandataire: **Courtellemont, Alain et al,**
**"THOMSON-CSF" - SCPI 173, bld Haussmann**
**F-75360 Paris Cedex 08 (FR)**

Courier Press, Leamington Spa, England.

## Dispositif de synchronisation à partir d'un signal numérique reçu et systéme de transmission comportant un tel dispositif

L'invention concerne les dispositifs de synchronisation en transmission numérique permettant d'asservir une horloge sur le rythme d'un message numérique reçu afin de pouvoir démoduler ce message.

Dans les transmissions numériques le débit des informations recues est connu en fréquence de récurrence mais ne l'est pas en phase. En effet la phase est d'une part fonction de la phase à l'origine de chaque élément binaire, appelé bit dans ce qui suit, et d'autre part dépend des conditions de propagation. Pour démoduler le message numérique reçu une horloge asservie en phase sur le débit numérique du message est nécessaire. Cet asservissement doit être réalisé lorsque le début du message (ce message comporte des bits de repérage suivis de bits d'information) arrive. Il est à noter que les bits de repérage servent à déterminer le premier bit d'information. Il est connu, de faire précéder le message, d'un signal, appelé "roulement", contenant des successions de "0" et de "1" logique.

L'inconvénient de cette procédure est relatif aux messages courts et répétitifs pour lesquels le temps réservé aux bits de repérage réduit d'autant le temps disponible pour la transmission des bits d'information.

·La présente invention a pour objet de remédier à cet inconvénient.

Un dispositif de synchronisation selon l'invention tel qu'il est décrit dans la revendication 1 ci-jointe permet d'atteindre ce but.

L'invention sera mieux comprise et d'autres caractéristiques apparaîtront à l'aide de la description et des dessins s'y rapportant sur lesquels:

—la figure 1, est un schéma d'une variante d'un dispositif de synchronisation selon le brevet français 1 426 996;

—la figure 2, représente des diagrammes tensiontemps des signaux de commande qui régissent le fonctionnement du dispositif de la figure 1;

—la figure 3, est un schéma d'un mode de réalisation préféré selon l'invention.

Les éléments qui se correspondent indentiquement d'une figure à l'autre sont désignés par le même repère.

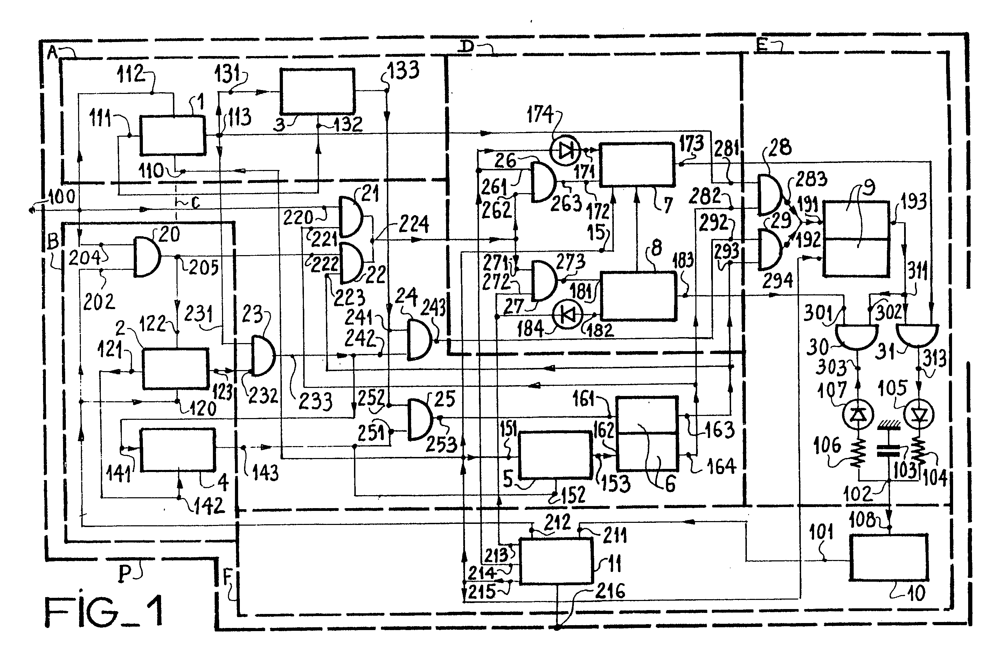

Sur la figure 1, une borne d'entrée 100 d'un ensemble P est destiné à recevoir des impulsions provenant d'un dispositif non représenté. Ces impulsions sont obtenues par différenciation d'un message numérique. Cet ensemble P comprend six sous-ensembles principaux repérés A, B, C, D, E, F.

Ces sous-ensembles A, B, C, D, E, F, représentent respectivement un sous-ensemble A de contrôle approximatif de la fréquence de récurrence du signal appliqué à la borne d'entrée 100; un sous-ensemble B de contrôle précis de la fréquence de récurrence et du déphasage de ce même signal par rapport à un signal délivré par un générateur; un sous-ensemble C de sélection des impulsions constituant le signal appliqué à la borne d'entrée 100; un sous-ensemble D de mise en mémoire des impulsions ci-dessus et de génération de deux signaux caractéristiques de l'avance et du retrad de ces impulsions par rapport au signal délivré par le générateur susmentionné; un sous-ensemble E de commande de la fréquence d'une horloge 10; un sous-ensemble F générateur de signaux périodiques.

Le sous-emsemble A comprend deux compteurs électroniques 1 et 3.

Le sous-ensemble B comprend deux compteurs électroniques 2 et 4 et une porte électronique "ET" 20.

Le sous-ensemble C comprend cinq portes électroniques "ET" 21, 22, 23, 24 et 25 un compteur électronique 5 et un circuit basceleur bistable 6. La porte électronique "ET" 20 est commune aux sous-ensembles B et C.

Le sous-ensemble D comprend deux portes électroniques "ET" 26 et 27, deux circuits à mémoire 7 et 8, et deux diodes 174 et 184.

Le sous-ensemble E comprend quatre portes électroniques "ET" 28, 29, 30, et 31, un circuit basculeur bistable 9, deux diodes 107 et 105, deux résistances 104 et 106 et un condensateur 103.

Le sous-ensemble F comprend une horloge 10 et un générateur de signaux périodiques 11 constituant une base de temps.

Les signaux périodiques délivrés sur des bornes de sortie 212, 213, 214, 215 et 216, par ce générateur, 11, déterminent presque entièrement le fonctionnement de l'ensemble P; ces signaux seront donc définis en premier lieu. A la borne de sortie 215 correspond un signal périodique dit "primaire" formé d'impulsions brèves définissant et délimitant par leur période de récurrence une période de base T. A la borne de sortie 213 correspond un signal dit "secondaire" de forme rectangulaire dont les fronts avant coïncident dans le temps avec ceux du signal primaire. A la borne de sortie 214 correspond un signal dit "tertiaire", de forme rectangulaire, de même fréquence que le précédent avec lequel il présente un déphasage égal à 180 degrés. A la borne de sortie 212 correspond un signal dit "quaternaire", de forme rectangulaire et dissymétrique de fréquence de récurrence égale à celle du signal "primaire", dont l'alternance positive, de durée inférieure à celle de l'alternance négative, coïncide en son milieu avec le front avant du signal tertiaire. A la borne de sortie 216 correspond un cinquième signal identique au signal primaire avec lequel il présente un déphasage égal à 180 degrés.

Le compteur 1 compte le nombre d'impulsions reçues par période de base: il reçoit le signal d'entrée par la borne 112, le signal de la base de temps, par la borne 110, issu de la borne 215 du générateur 11. Ce compteur est constitué de telle sorte, que si le signal reçu correspond aux critères de vérification de la fréquence de récurrence dudit signal (une seule impulsion par période de base dans ce mode de réalisation) il transmet une impulsion sur la borne de sortie 113 à la fin de chaque période; si le signal reçu ne correspond pas auxdits critères (si le nombre d'impulsions du signal en un temps donné défini par la période de base est supérieur à 1) il transmet une impulsion à la fin de la période correspondante sur la borne de sortie 111.

Le compteur 3 compte le nombre de périodes de base successives pour lesquelles le critère vérifié par le compteur 1 a été satisfait. Les impulsions à compter issues de la borne 113 sont appliquées à la borne d'entrée 131. Ce compteur est remis à zéro par chaque impulsion sortant par la borne 111 et transmise par la borne 132. Lorsque ce compteur 3 a compté un nombre déterminé n d'impulsions successives bonnes (pendant une durée où il y a soit présence de bonnes impulsions soit absence totale d'impulsion) par exemple 4, il reste sur sa position et il provoque l'ouverture des portes 24 et 25 au moyen de son signal de sortie appliqué à la borne 133.

Le compteur 2, est analogue au compteur 1 à cette différence près qu'il effectue le contrôle pendant un intervalle de temps plus court que la période de base, cet intervalle de temps étant par exemple égal à T/4 et centré au milieu de la période de base T; la durée de cet intervalle de temps est liée à la valeur du niveau de bruit à partir duquel on désire que l'asservissement ne se réalise pas. En augmentant la durée de cet intervalle de temps, le niveau de bruit permettant un asservissement est accru, mais on accroît également la probabilité de faux asservissement sur un signal erratique. Cet intervalle de temps est déterminé par un signal fourni par le générateur 11 sur la borne de sortie 212 et appliqué à la borne de remise à zéro 120 du compteur 2.

Le signal provenant de la borne d'entrée 100 apres passage dans la porte 20, ouverte pendant la période de contrôle précis, entre par là borne 122. Cette porte 20 est ouverte par le signal issu de la borne 212.

Le compteur 4 est analogue au compteur 3. Il compte les impulsions de bon contrôle précis appliquées à la borne 141 sortant par la borne 123 du compteur 2. Ces impulsions traversent la porte 23 qui vérifie la coïncidence des deux contrôles. Ce compteur 4 est remis à zéro par l'impulsion de contrôle défectueux, issue de la borne 121 appliquée à la borne 142.

Lorsque le compteur 4 a compté un nombre déterminé p d'impulsions successives, le signal sortant par la borne 143 ouvre la porte 25, qui, si la coïncidence avec le signal de sortie du compteur 3 est réalisée, commande la basculement du bistable 6, en position haute.

Pour simplifier cet exposé, les deux états d'un basculeur bistable seront respectivement désignés par position haute et position basse, telles que celles des basculeurs représentées sur la figure 1. De même un basculeur bistable sera simplement désigné par bistable.

Le compteur 5 est alimenté en permanence par le signal sortant par la borne 215 du générateur 11 et appliqué à la borne 151.

Si aucune impulsion n'entre de la borne 143 du compteur 4 par la borne de remise à zéro 152 pendant un nombre de périodes égal à la capacité de comptage du compteur 5 ce dernier se sature et assure le retour du bistable 6 en position basse. En position basse, le bistable 6 ouvre les portes 21 recevant le signal d'entrée et 28 recevant les bonnes impulsions du compteur 1 et ferme les portes 22, recevant les impulsions de sortie de la porte 20, et 29 recevant les impulsions de sortie d'une porte 24 qui reçoit respectivement sur ses deux entrées les impulsions de sortie du compteur 3 et de la porte 23. En position haute, le bistable 6 ouvre les portes 22 et 29 et ferme les portes 21 et 28.

La capacité de comptage du compteur 5 est plus grande que celle des compteurs 3 et 4, par exemple 256 ou 512 impulsions.

L-ensemble, formé par les portes 26 et 27 commandées respectivement par les signaux correspondant aux bornes 214 et 213 issus du générateur 11, aiguille les impulsions du signal provenant de la porte 21, ou de la porte 22 vers l'un des deux circuits à mémoires 7 et 8. Le circuit à mémoire 8 délivre sur sa borne de sortie 183, une impulsion négative rectangulaire dont le front avant est formé par l'impulsion éventuelle entrant par une borne d'entrée 181 retardée de 1,25 T environ et dont le front arrière est formé par le front arrière du signal secondaire entrant, à travers la diode 184 précédée d'un circuit différenciateur non représenté par la borne 182 et étant affecté du même retard.

Le circuit à mémoire 7 délivre sur sa borne de sortie 173, une impulsion positive rectangulaire, dont le front avant est formé par le front avant retardé à 0,75 T environ du front avant du signal tertiaire entrant, à travers la diode 174 précédée d'un circuit différenciateur non représenté, par la borne 171 et dont le front arrière est formé par l'impulsion éventuelle entrant par la borne 172, affecté du même retard.

Il est ainsi produit, si l'impulsion du signal sortant de l'une des portes 21 ou 22 correspond dans le temps à la première moitié d'une période de base T, une impulsion négative sur la borne 183. Si cette impulsion du signal correspond dans le temps à la deuxième moitié de cette période T, il est produit une impulsion positive sur la borne 173. La durée de ces impulsions est proportionnelle à l'écart de l'impulsion du signal par rapport au milieu de la période de base considérée. Compte tenu des retards apportés par les circuits à mémoires 7 et 8, on dispose de l'un de ces deux signaux sensiblement au milieu de la période de base suivante.

Lorsqu'à la fin de la période de base considérée, les contrôles ont été effectués et sont positifs une impulsion sort de la borne 113 et traverse la porte 28 si le bistable 6 est en position basse; si le bistable 6 est en position haute, une impulsion sort de la porte 24 et traverse la porte 29. L'une de ces deux impulsions fair basculer le bistable 9 qui provoque l'ouverture des portes 30 et 31 recevant respectivement les impulsions de sortie des circuits à mémoires 8 et 7.

Au cours de la période de base qui suit immédiatement et suivant que l'impulsion du signal d'entrée coïncide dans le temps avec une alternance positive correspondant au signal secondaire ou avec une alternance positive correspondant au signal tertiaire précité, le condensateur d'intégration 103 est soit chargé par le signal sortant de la borne 183, soit déchargé par le signal sortant de la borne 173. Dans un cas le signal, délivré sur la borne 173, traverse la porte 31, la diode 105 et la résistance de charge 104. Dans l'autre cas le signal traverse la porte 30, la diode 107 et la résistance de charge 106.

Le condensateur 103 intègre les signaux respectivement délivrés sur les bornes 173 et 183, et la tension continue d'erreur qui en résulte, délivrée sur une borne 102, agit sur la fréquence de l'horloge 10, par un moyen connu, par exemple: une réactance variable. A une diminution de cette tension continue correspond une augmentation de la fréquence de l'horloge 10.

L'horloge 10 est ainsi asservie en phase sur les impulsions reçues et un signal d'erreur n'est transmis au moyen de commande de la fréquence de l'horloge que si les contrôles réalisés dans la période de base considérée sont satisfaisants.

Lorsqu'un ou plusieurs contrôles successifs apparaissent "mauvais" le bistable 6 étant en position haute, le bistable 9 reste en position basse, car il est remis dans cette position à la fin de chaque période de base par le signal sortant de la borne 215 du générateur 11 appliqué à la borne 192. Les portes 30 et 31 restent fermées et le bistable 6 reste en position haute jusqu'à ce que le compteur 5 soit saturé.

La fréquence de l'horloge 10 reste constante, la tension aux bornes du condensateur 103 restant à la valeur déterminée à la fin de la période d'asservissement. Lorsque le compteur 5 se sature, il provoque le basculement du bistable 6 en position basse et l'asservissement de phase s'effectue à nouveau avec un contrôle approché.

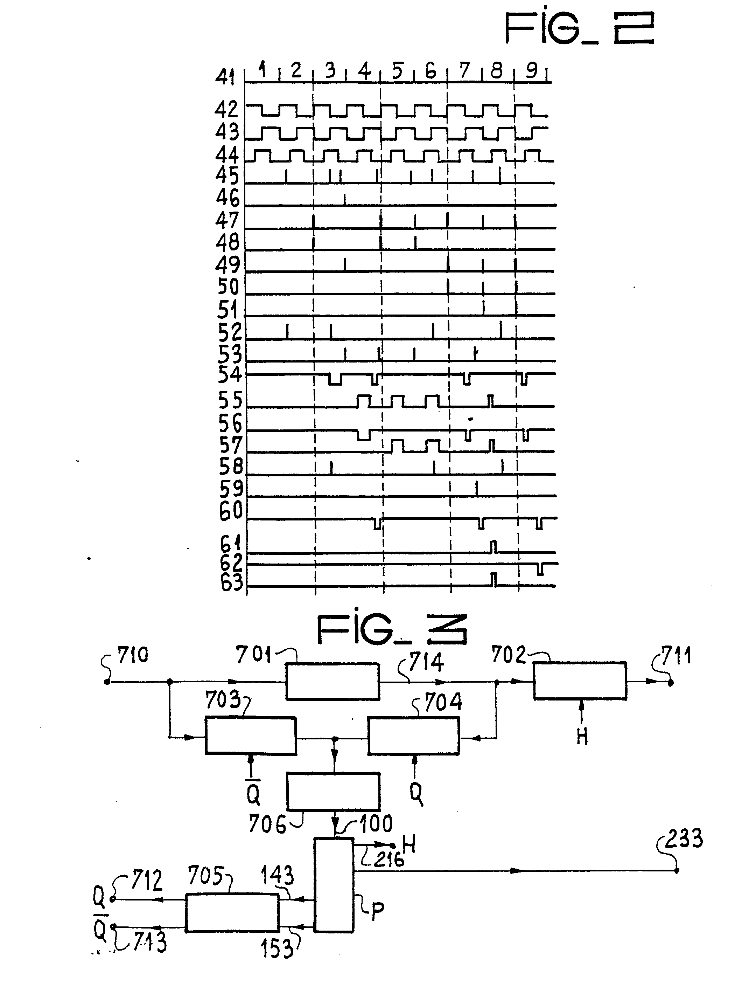

La figure 2 représente des formes d'onde des tensions ou des courants en différents points du dispositif de synchronisation correspondant à la figure 1.

La figure est représentée avec un "roulement" donnant une transition par période de base lorsque le signal reçu est de bonne qualité.

La ligne 41 représente le signal primaire de base de temps au point 215.

La ligne 42 représente le signal secondaire au point 213.

La Ligne 43 représente le signal tertiaire au point 214.

La ligne 44 représente le signal quaternaire au point 212.

La ligne 45 représente le signal d'entrée au point 100.

La ligne 46 représente le signal de contrôle approximatif (mauvais) au point 111.

La ligne 47 représente le signal de contrôle approximatif (bon) au point 113.

La ligne 48 représente le signal de contrôle précis (mauvais) au point 121.

La ligne 49 représente le signal de contrôle précis (bon) au point 123.

La ligne 50 représente le signal de contrôle précis au point 233.

La ligne 51 représente le signal de contrôle précis au point 243.

Les lignes 52 à 57 correspondent au bistable 6 en position basse.

La ligne 52 représente le signal au point 181.
La ligne 53 représente le signal au point 172.
La ligne 54 représente le signal au point 183.
La ligne 55 représente le signal au point 173.
La ligne 56 représente le signal au point 303.
La ligne 57 représente le signal au point 313.

Les lignes 58 à 63 correspondent au bistable 6 en position haute.

Le ligne 58 représente le signal au point 181.
La ligne 59 représente le signal au point 182.
La ligne 60 représente le signal au point 183.
La ligne 61 représente le signal au point 173.
La ligne 62 représente le signal au point 303.
La ligne 63 représente le signal au point 313.

En position basse du bistable 6 seules les périodes 1 et 3 sont considérées comme mauvaises et aucun signal d'asservissement n'est transmis à l'horloge pendant les périodes 2 et 4.

En position haute du bistable 6, la période 3 est considérée comme mauvaise malgré l'impulsion présente sur la borne 123, la seconde impulsion de cette période étant décélée par le contrôle approximatif.

De plus, aucun signal d'asservissement n'est envoyé à l'horloge pendant les périodes 5, 6 et 7 avant que la porte 24 ne soit ouverte par le comptage de quatre périodes bonnes (n=4) en contrôle approché par le compteur 5.

La description de l'art antérieur modifié faite, ci-dessus, à l'aide des figures 1 et 2 est nécessaire à la compréhension de l'invention, qui comporte l'ensemble P de la figure 1 et qui sera décrite à l'aide de la figure suivante.

Sur la figure 3 une borne d'entrée 710, recevant un message numérique, alimente en parallèle, une ligne à retard 701, à dispositif à transfert de charges, en série avec un échantillonneur 702 dont la sortie 711 constitue une première sortie du dispositif, et l'entrée 100 de l'ensemble P de la figure 1, à travers un interrupteur électronique 703, commandé par un signal $\bar{Q}$, diposé en série avec un sous-ensemble 706. La sortie 714 de la ligne à retard 701 est couplée à l'entrée 100 de l'ensemble P, à travers un interrupteur électronique 704, commandé par un signal Q, disposé en série avec le sous-ensemble 706. Le sous-ensemble 706 permet de différencier les transitions entre les niveaux logiques du message numérique. Les signaux Q et $\bar{Q}$ sont respectivement fournis par des sorties directe 712 et inversée 713 d'un bistable 705 ayant deux entrées respectivement reliées aux bornes 143, borne de sortie du compteur 4, et 153, borne de sortie du compteur 5, de l'ensemble P.

La sortie 233 de la porte ET 23 de l'ensemble P constitue une seconde sortie du dispositif et la sortie 216 du générateur de signaux 11 de l'ensemble P est reliée à l'entrée de commande de l'échantillonneur 702. Dans cette réalisation, l'entrée 152 du compteur 5 est reliée à la sortie 143 du compteur 4. La remise à zéro du compteur 5 n'est donc réalisée qu'après p bonnes impulsions sommées dans le compteur 4. Le fonctionnement de ce dispositif qui comporte l'invention est le suivant.

Le dispositif selon l'invention permet de recevoir un message numérique ne comportant pas de transitions successives précédant les bits de repérage. En conséquence l'asservissement en phase de l'horloge 10 de l'ensemble P (figure 1) doit être principalement réalisé avec les bits de repérage reçus à l'entrée de la ligne à retard 701, afin que cette horloge soit asservie quand le premier bit de repérage est fourni par la sortie de la ligne à retard 701.

Cet asservissement est réalisé en connectant l'entrée 100 à l'ensemble P à l'entrée de la ligne à retard 701 pendant une durée $\theta_2$ inférieure au retard $\theta_1 = q \cdot T$ (q entier positif, T étant la période du rythme du message numérique) de la ligne (acquisition de l'asservissement de phase de l'horloge) puis en connectant cette entrée 100 à la sortie de la ligne à retard 701 dès que cet asservissement est réalisée.

Pendant la durée $\theta_3 = \theta_1 - \theta_2$ où l'entrée 100 ne reçoit pas de signaux, l'horloge fonctionne "en volant" sur la dernière correction de phase reçue. Si cette durée $\theta_3$ est inférieure au temps de comptage $\theta_4$ du compteur 5, comme on le suppose dans cette réalisation, l'horloge est toujours asservie sur la dernière correction de phase reçue et l'asservissement peut reprendre dès que le premier bit de repérage est délivré sur la sorte de la ligne à retard 701.

La connection de l'entrée 100 est réalisée par les interrupteurs électroniques 703 et 704 de la manière suivante.

La mise à l'état "1" du bistable 705 (Q=1 et $\bar{Q}$=0) est réalisée lorsque les signaux logiques fournis par les bornes 143 et 153 de l'ensemble P sont respectivement à l'état "1" et "0". Dans le cas contraire, la sortie 143 étant à l'état "0" et la sortie 153 étant à l'état "1", le bistable est mis à l'état "0" (Q=0 et $\bar{Q}$=1). Lorsque le bistable 705 est à l'état "1" les interrupteurs électroniques 704 et 703 sont respectivement fermé et ouvert, et permettent ainsi aux signaux de sortie de la ligne à retard 701 d'asservir l'horloge de l'ensemble P. Dans le cas contraire (bistable 705 à l'état "0") les interrupteurs 704 et 703 sont respectivement ouvert et fermé, et permettent ainsi aux signaux d'entrée de la ligne à retard 701 d'asservir l'horloge de l'ensemble P.

Il est à noter que la sortie 143 est à l'état "1" lorsque p bonnes impulsions successives ont été enregistrées dans le compteur 4 (figure 1), et à l'état "0" dans le cas contraire. De même la sortie 153 est à l'état "1" lorsque le compteur 5 a atteint son compte maximal. En fait, le passage de l'état 0 à l'état 1 du signal de sortie de la borne 143 indique que la synchronisation peut être considérée comme suffisamment bonne pour démoduler le message numérique. Inversement le signal de sortie de la borne 153 indique que la synchronisation ne peut plus être considéré comme suffisamment bonne.

Lorsque les bits de repérage d'un message numérique sont reçus par l'entrée 710, l'ensemble P n'ayant reçu auparavant que du bruit, la sortie 143 est à l'état "0" (pas de bonnes impulsions p) et la sortie 153 à l'état "1" (pas de remise à zéro car compteur 4 non saturé). Le bistable 705 est donc à l'état "0" (Q=0 et $\bar{Q}$=1) et les interrupteurs 703 et 704 sont respectivement fermé et ouvert. L'asservissement de phase de l'horloge commence à partir de la première transition relative au premier bit de repérage de la façon décrite précédemment (figure 1). Cette durée d'asservissement sera appelée "acquisition". Lorsque le signal de la sortie 143 de l'ensemble P passe à l'état "1" (p bonnes impulsions) le signal de la sortie 153 passe à l'état "0" (car le compteur est remis à zéro par la sortie 152 qui a changé d'état). En conséquence le bistable 705 est mis à l'état "1" et l'entrée 100 de l'ensemble P est reliée à la sortie 714 de la ligne à retard 701. Dès que l'entrée 100 est connectée à la sortie 714 de la ligne à retard 701, la sortie 143 du compteur 4 passe à l'état "0" car l'entrée 100 ne reçoit plus d'informations pendant la durée $\theta_3$ qui suit cette connexion. La phase de l'horloge reste celle obtenue en fin d'acquisition; cette durée $\theta_3$ correspond au fonctionnement "en volant" de l'horloge. Si la sortie 153 du compteur 5 (de la figure 1) n'a pas changé d'état, soit si la durée $\theta_3$ est inférieure au temps de comptage $\theta_4$ (de 0 à la pleine échelle) du compteur 5 comme c'est le cas pour la présente réalisation, les états de sorties 143 et 153 sont à l'état "0", qui est un état de maintien du bistable à l'état précédent, et l'entrée 100 de l'ensemble P reste connectée à la sortie 714 de la ligne à retard 701.

Lorsque le message arrive à la sortie 714 de la ligne à retard 701, le contrôle de l'asservissement de phase est à nouveau réalisé comme précédemment. C'est alors un fonctionnement en "poursuite" car la phase de l'horloge suit la phase du message numérique.

Si la durée $\theta_3$ était supérieure au temps de comptage $\theta_4$ du compteur 5 le changement d'état du signal de la sortie 153 connecterait l'entrée 100 de l'ensemble P à l'entrée de la ligne à retard 701, et le message ne pourrait être démodulé. Cette possibilité est exclue dans la présente réalisation.

Si pendant le fonctionnement en "poursuite", du bruit perturbe le message, le signal de la sortie 143 passe à l'état "0" (car non saturation du compteur 4) et le compteur 5 compte les impulsions reçues sur son entrée 151 et s'il n'est pas remis à zéro avant la fin du comptage, le signal de la sortie 153 de ce compteur passe à l'état "1"; en conséquence l'entrée 100 de l'ensemble P est connectée à l'entrée de la ligne à retard 701 pour un nouveau fonctionnement en "acquisition".

Il est à noter qu'après l'arrivée du dernier bit du message sur l'entrée 100 (fonctionnement en "poursuite"), l'horloge fonctionne "en volant" pendant la durée de comptage du compteur 5; ceci permet de maintenir l'asservissement et la connection de l'entrée 100 à la sortie 714 de la ligne à retard 701, pendant une durée $\theta_4$ après l'arrivée de ce dernier bit sur l'entrée 100, d'où la possibilité de recevoir un second message séparé du premier par un intervalle de temps $\theta_5$ inférieur à $\theta_4$ sans une nouvelle phase acquisition.

La ligne à retard 701 est constituée par un registre à décalage, à dispositif à transfert de charges, retardant les informations reçues sur son entrée d'une durée $\theta_1 = q \cdot T$ avec q entier positif et T étant la période du rythme du message numérique, et tel que $\theta_1$ est au moins égal à la durée pT du comptage des p impulsions par le compteur 4 de la figure 1. Dans ce mode de réalisation préféré p et q sont respectivement égaux à 8 et 12. En outre les bits du message numérique sont échantillonnés par un dispositif d'entrée (non représenté mais classique pour ce type de ligne à retard) de la ligne à retard à une fréquence multiple de la fréquence bit $f = mF = m/T$ avec $m = 10$ dans le cas présent.

L'échantillonneur 702 commandé par le signal d'horloge asservi permet de reconstituer le message numérique échantillonné (remise en forme du message numérique) et de le fournir sur la sortie 711 où il sera démodulé.

L'invention n'est pas limitée au mode de réalisation décrit et representé, le dispositif est susceptible de variantes.

En particulier, il faut noter que notre invention a été décrite à partir du dispositif d'asservissement présenté dans le brevet FR—A—1 426 996, mais cette application n'est pas restrictive. Il est à la portée de l'homme de l'art de mettre en application l'invention à partir d'autres moyens d'asservissement connus. En effet, pour que le dispositif de synchronisation fonctionne il suffit de disposer d'un signal indiquant que la synchronisation de l'horloge sur le rythme du message est suffisamment bonne pour démoduler le message (ce signal correspond au signal fourni par la borne 143) et d'un signal indiquant que la synchronisation de l'horloge n'est plus assurée (ce signal correspond au signal fourni par la borne 153). Il est à la portée de l'homme du métier, à la lumière du niveau de la technique des asservissements, d'obtenir de tels signaux sur la base des renseignements fournis par la description.

Il est en outre à noter qu'un tel dispositif est notamment utilisable dans les systèmes de transmission numérique.

**Revendications**

1. Dispositif de synchronisation en transmission numérique, comportant des moyens d'asservissement (P) d'un circuit d'horloge sur le rythme d'un message numérique constitué de bits de répérage suivis de bits d'information, ces moyens d'asservissement (P) ayant une première sortie fournissant un premier signal indiquant que la synchronisation est réalisée et une deuxième sortie fournissant un deuxième signal indiquant que la synchronisation n'est pas réalisée, caractérisé en ce qu'il comporte: une ligne à retard (701) recevant le message numérique sur son entrée; des moyens de commutation (703 et 704) pour coupler l'entrée des moyens d'asservissement soit à l'entrée soit à la sortie de la ligne à retard (701); et un circuit de commande (705) ayant une première et une deuxième entrée respectivement couplées à la première et à la deuxième sortie des moyens d'asservissement (P), ce circuit de commande (705) commandant les moyens de commutation (703 et 704) pour permettre un asservissement du circuit d'horloge à partir des bits de repérage reçus à l'entrée de la ligne à retard, puis un contrôle de cet asservissement au moyen des bits du message numérique fournis par la sortie de la ligne à retard (701).

2. Dispositif de synchronisation selon la revendication 1, caractérisé en ce qu'il comporte un échantillonneur (702) destiné à reconstituer le message numérique et à le fournir sur sa sortie et comportant pour cela une entrée de signal couplée à la sortie de la ligne à retard (701) et une entrée de commande recevant un signal d'horloge fourni par une troisième sortie des moyens d'asservissement (P), et en ce que la ligne à retard (701) est un registre à décalage, à dispositif à transfert de charges, présentant un retard $\theta_1 = q \cdot T$ avec q entier positif supérieur ou égal à 1 et T étant la période du rythme du message numérique, et ayant une fréquence de base de commande $F_b = mF$ avec m entier positif supérieur ou égal à 2 et $F = 1/T$.

3. Dispositif de synchronisation selon la revendication 1, caracterisé en ce que les moyens de commutation (703 et 704) comportent un premier (703) et un second (704) interrupteur électronique couplant respectivement l'entrée et la sortie de la ligne à retard (701) à l'entrée des moyens d'asservissement (P).

4. Dispositif de synchronisation selon la revendication 3, caractérisé en ce que le circuit de commande (705) des moyens de commutation (703 et 704) est un circuit bistable, ayant une première et une seconde entrée respectivement couplées à une deuxième et une troisième sortie des moyens d'asservissement (P), et une sortie directe et une sortie inversée commandant respectivement les second (704) et premier (703) interrupteurs électroniques.

5. Système de transmission numérique, caractérisé en ce qu'il comporte au moins un dispositif de synchronisation selon l'une des revendications précédentes.

**Patentansprüche**

1. Vorrichtung zum Synchronisieren numerischer Übertragungen, die ein Servo-system (P) einer Zeitgeberschaltung für die Zeitsteuerung einer numerischen Meldung einschliesst, die aus Indexbits besteht, gefolgt von Informationsbits, wobei das Servosystem (P) eine erste Ausgabe hat, die ein erstes Signal gibt, das die durchgeführte Synchronisierung anzeigt, und eine zweite Ausgabe hat, die ein zweites Signal gibt, das die nicht durchgeführte Synchronisierung anzeigt, dadurch gekennzeichnet, dass sie einschliesst: eine Verzögerungsleitung (701), die eine numerische Meldung an ihrer Eingabe empfängt; Schaltmittel (703 und 704) zur Verbindung der Eingabe des Servosystems entweder mit der Eingabe oder der Ausgabe der Verzögerungsleitung (701); und eine Steuerschaltung (705), welche die Schaltmittel (703 und 704) steuert, um eine Steuerung der Zeitgeberschaltung von den Indexbits aus zu ermöglichen, die an der Eingabe der Verzögerungsleitung empfangen werden, und dann eine Kontrolle dieser Servofunktion durch die Bits der numerischen Meldung, die an der Ausgabe der Verzögerungsleitung (701) gegeben wird.

2. Synchronisierungsvorrichtung gemäss Anspruch 1, dadurch gekennzeichnet, dass sie einen Probenehemer (702) zur Rekonstituierung der numerischen Meldung einschliesst, der sie an die Ausgabe leitet und dazu einen Signaleingang einschliesst, der mit der Ausgabe der Verzögerungsleitung (701) verbunden ist und einer Steuereingabe, die ein Zeitbegersignal empfängt, das von einer dritten Ausgabe des Servosystems (P) gegeben wird; und dadurch, dass die Verzögerungsleitung ein Verschiebungsregister ist, eine Vorrichtung zur Übertragung von Ladungen, die eine Verzögerung von $B_1 = q \cdot T$ haben, wobei q eine ganze positive Zahl ist, die grösser als oder gleich 1 ist und T die Zeitgeberperiode der numerischen Meldung ist und eine Repetitionsfrequenz der Steuerung $F_b = mF$ hat, wobei m eine ganze positive Zahl oder gleich 2 ist und $F = 1/T$.

3. Synchronisierungsvorrichtung gemäss Anspruch 1, dadurch gekennzeichnet, dass die Schaltmittel (703 und 704) einen ersten (703) und einen zweiten (704) elektronischen Schalter einschliessen, der die Eingabe bzw. die Ausgabe der Verzögerungsleitung (701) an der eingabe des Servosystems (P) anschliesst.

4. Synchronisierungsvorrichtung gemäss Anspruch 3, dadurch gekennzeichnet, dass die Steuerschaltung (705) der Schaltmittel (703 und 704) eine bistabile Schaltung ist, die eine erste und eine zweite Eingabe hat, die mit der zweiten bzw. der dritten Ausgabe des Servosystems (P) verbunden sind, und eine direkte Ausgabe und eine umgekehrte Ausgabe den zweiten (704) bzw. den ersten elektronischen Schalter steuern.

5. Numerisches Übertragungssystem, dadurch gekennzeichnet, dass es mindestens eine Synchronisierungsvorrichtung gemäss einem der vorstehenden Ansprüche enthält.

**Claims**

1. Device for synchronizing numerical transfer, comprising a servosystem (P) of a clock circuit on the timing of a numerical message constituted of index bits followed by information bits, with said servosystem (P) having a first output supplying a first signal which indicates that the synchronization is realized and a second output supplying a second signal which indicates that the synchronization is not realized, characterized in that it comprises: a delay line (701) receiving the numerical message on its input; switching means (703 and 704) for connecting the input of the servosystem either with the input or the output of the delay line (701); and a control circuit (705) controlling the switching means (703 and 704) to allow a control of the clock circuit from the index bits received at the input of the delay line, and then a checking of this control by means of numerical message bits supplied by the output of the delay line (701).

2. Synchronization device according to claim 1, characterized in that it comprises a sampler (702) for reconstituting the numerical message and to supply it to the output and comprising therefore a signal input receiving a clock signal supplied by a third output of the servosystems (P), and in that the delay line (701) is a shift register, a device for the transfer of charges, having a delay $B_1 = q \cdot T$, with q being a positive integer greater than or equal to 1 and T being the clock period of the numerical message, and having a repetition rate of control $F_b = mF$, with m being a positive integer greater than or equal to 2 and $F = 1/T$.

3. Synchronization device according to claim 1, characterized in that the switching means (703 and 704) comprise a first (703) and a second (704) electronic switch connecting, respectively, the input and the output of the delay line (701) at the input of the servosystem (P).

4. Synchronization device according to claim 3, characterized in that the control circuit (705) of the switching means (703 and 704) is a bistable circuit having a first and a second input, respectively connected to a second and a third output of the servosystem (P), and a direct output and an inverted output controlling, respectively, the second (704) and the first (703) electronic switches.

5. Numerical transmission system, characterized in that it comprises at least one synchronization device according to one of the preceding claims.

FIG_1

# FIG_2

# FIG_3